# EUROPÄISCHE PATENTSCHRIFT

(11) **EP 2 597 335 B1**
(45) Veröffentlichungstag und Bekanntmachung des Hinweises auf die Patenterteilung: **29.10.2014**
(21) Anmeldenummer: 12466021.8
(22) Anmeldetag: 19.11.2012
(51) Int. Cl.: F16H 7/12

(54) **Mechanischer Riemenspanner**
Mechanical belt tensioner
Tendeur de courroie mécanique

(30) Priorität: 23.11.2011 CZ 20110759
(43) Veröffentlichungstag der Anmeldung: 29.05.2013
(73) Patentinhaber: Skoda Auto a.s., 293 60 Mladá Boleslav (CZ)
(72) Erfinder: Hradiský, Jan, 293 07 Mladá Boleslav - Debr (CZ); Novotný, Milos, 293 07 Mladá Boleslav - Debr (CZ); Franc, Karel, 293 07 Mladá Boleslav (CZ); Hozák, David, 293 07 Mladá Boleslav - Debr (CZ)

(56) Entgegenhaltungen:
- EP-A1- 1 541 896
- DE-A1- 4 015 027
- DE-A1- 10 023 491

## Beschreibung

### Technisches Gebiet

Die Erfindung betrifft einen mechanischen Spanner des elastischen Antriebriemens der Nebenaggregate des Fahrzeuges mit einer einzig möglichen Feststellposition gegen den Riemenrücklauf, entsprechend dem Oberbegriff des Anspruchs 1 und wie er aus dem Dokument DE 4015027A bekannt ist.

### Bisheriger Stand der Technik

Derzeit befinden sich in den mit einem Verbrennungsmotor angetriebenen Kraftfahrzeugen verschiedene Nebenaggregate, wie z.B. die Lichtmaschine, der Kompressor, die Klimaanlage, der Servoantrieb und weitere. Der Antrieb der Nebenaggregate wird meistens über einen mehrrilligen Keilriemen gelöst. Für die notwendige Laufzeit und richtige Funktion des Riemenantriebs muss der Riemen in der Funktionsstellung richtig gespannt werden. Zu diesem Zweck dienen die mechanischen Riemenspanner.

Die bestehenden mechanischen Riemenspanner sind meistens als permanente, d.h. den Riemen ständig nachspannende Spanner ausgestaltet. Wegen der neuen elastischen Riemen musste auch die Konstruktion der Riemenspanner angepasst werden. Bei der neuen Konstruktion des Riemenspanners musste eine einzige Feststellposition gegen den Rücklauf sichergestellt werden.

Die Spannvorrichtung mit einer einzigen Feststellposition ist teilweise aus dem Dokument DE10061895 bereits bekannt, wo ein Spanner mit Exzenter für den Antrieb der Nebenaggregate beschrieben ist. Bei dieser Lösung wird die Feststellposition des Riemenspanners mit der exzentrisch gelagerten Spannrolle erreicht. Der Nachteil dieser Lösung liegt in der Verwendung eines Radiallagers mit großem Durchmesser, dessen Abmessungen direkt aus dem Spannumfang des Spanners des Antriebsriemens der Nebenaggregate hervorgehen. Die Folge davon sind auch hohe Kosten.

### Darstellung der Erfindung

Die Aufgabe wird durch den erfindungsgemäßen mechanischen Riemenspanner gelöst. Die Darstellung liegt in der Konstruktion des mechanischen Spanners des elastischen Antriebsriemens der Nebenaggregate des Fahrzeuges mit einer einzig möglichen Feststellposition gegen den Rücklauf des Riemens. Der mechanische Riemenspanner spannt diesen Riemen in die vordefinierte Position, die seine notwendige Vorspannung sichert und einen einfachen Ein- bzw. Ausbau ermöglicht. Der mechanische Riemenspanner der Nebenaggregate mit einer Feststellposition gegen den Rücklauf umfasst den Grundkörper des eigentlichen Spanners, den Spannhebel und die Spannrolle.

Die Darstellung der Erfindung liegt darin, dass der Grundkörper des eigentlichen Spanners eine Abrollwand enthält, die eine Feststellkante aufweist. Der Spannhebel weist eine Arretierungsraste und eine länglichrunde Öffnung auf, die in der Richtung der Resultante der Kräfte im Riemen winkelverschwenkt ist. Die Arretierungsraste des Spannhebels ist als ein Sperrgegenstück ausgebildet, das in die Feststellkante des Grundkörpers des Spanners einrastet.

Der Spannhebel ist zum Grundkörper des Spanners mit einer linksdrehenden Schraube befestigt, die vor dem eigentlichen Anziehen eine durch die länglichrunde Öffnung begrenzte Dreh- und Schubbewegung des Spannhebels ermöglicht.

In der länglichrunden Öffnung des Spannhebels und im Drehpunkt des Grundkörpers ist eine linksdrehende Schraube angeordnet, die den Grundkörper und den Spannhebel des Spanners verbindet.

Der Spannhebel des Spanners umfasst auch eine Spannrolle, gebildet durch einen Axiallager, eine Riemenscheibe, eine Unterlage unter der rechtsdrehenden Schraube und eine rechtsdrehende Schraube, mit der die Spannrolle zum Spannhebel befestigt ist.

### Übersicht der Figuren der Zeichnungen

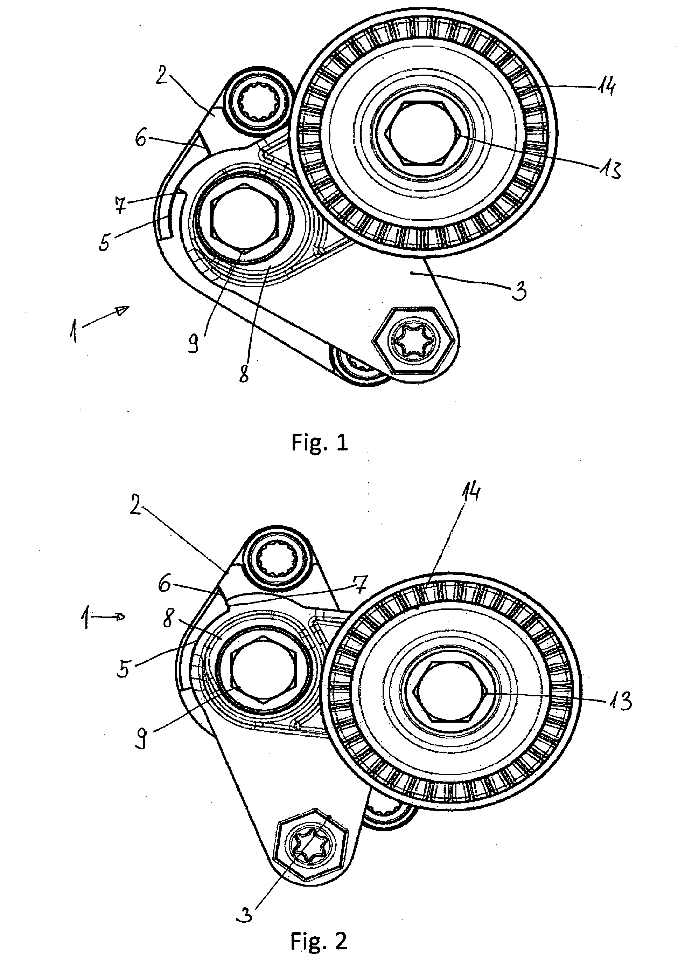

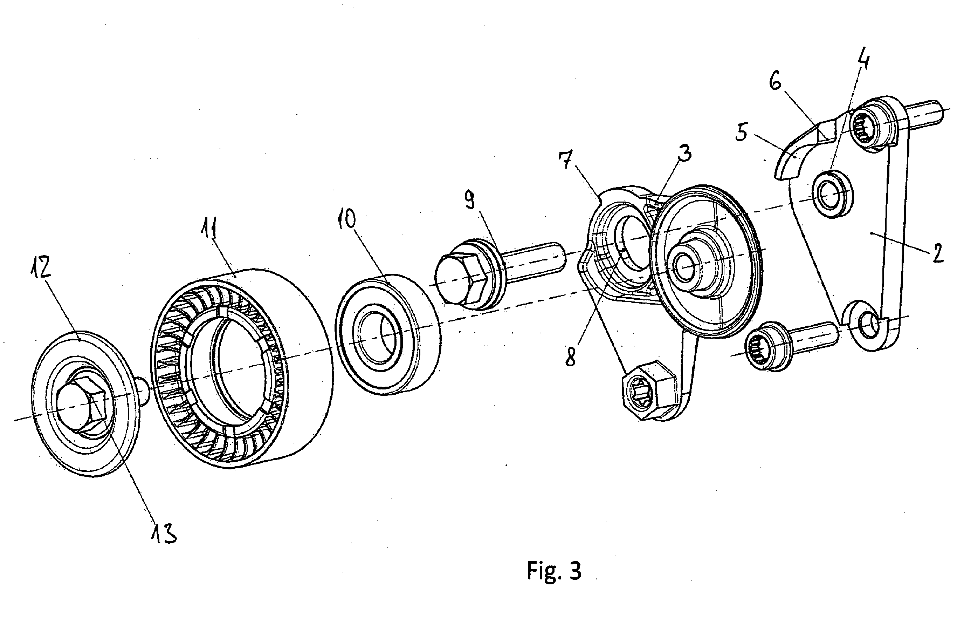

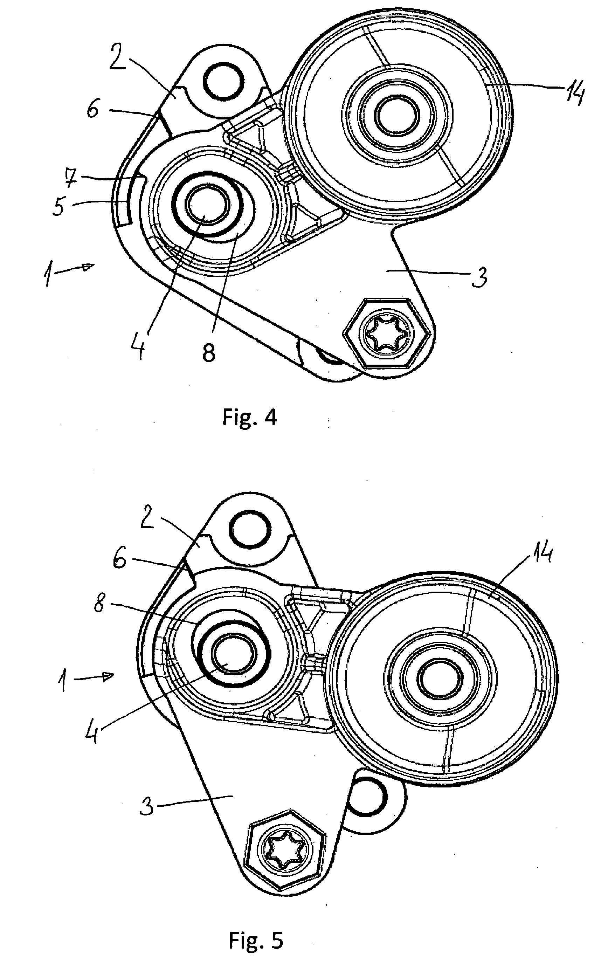

Fig. 1 zeigt den mechanischen Riemenspanner in der nicht eingerasteten Ausgangsmontageposition, Fig. 2 zeigt den mechanischen Riemenspanner in der eingerasteten Arbeitsspannposition, Fig. 3 zeigt eine Explosionszeichnung des Riemenspanners, Fig. 4 zeigt die Feststellfunktion des mechanischen Riemenspanners in der nicht eingerasteten Ausgangsposition, Fig. 5 zeigt die Feststellfunktion des mechanischen Riemenspanners in der eingerasteten Position.

### Ausführungsbeispiel der Erfindung

Der mechanische Spanner 1 des Antriebriemens der Nebenaggregate mit einer Feststellposition gegen den Rücklauf des Riemens nach Fig. 1 bis 5 umfasst einen Grundkörper 2 des eigentlichen Riemenspanners 1, den Spannhebel 3 und die Spannrolle 14. Der Grundkörper 2 des mechanischen Riemenspanners 1 weist eine bogenartige Wand 5 auf, die eine Feststellkante 6 hat, wobei sich der Spannhebel 3 entlang dieser bogenartigen Wand 5 bewegt. Der Spannhebel 3 weist eine Arretierungsraste 7 auf, die als ein Sperrgegenstück ausgebildet ist, das in die Feststellkante 6 des Grundkörpers 2 des Riemenspanners 1 einrastet.

Der Grundkörper 2 des mechanischen Riemenspanners 1 weist einen Drehpunkt 4 und der Spannhebel 3 eine länglichrunde Öffnung 8 auf, in der dieser Drehpunkt 4 angeordnet ist. Die länglichrunde Öffnung 8 ist winkelverschwenkt in der Richtung der Resultante der Kräfte im Riemen. Die Höhe der Arretierungsraste 7 entspricht der Distanz der äußeren Kreismittelpunkte in der länglichrunden Öffnung 8.

Die schwenkbare Verbindung des Spannhebels 3 mit dem Grundkörper 2 ist mittels der linksdrehenden Schraube 9 ausgeführt, die in der länglichrunden Öffnung 8 angeordnet ist.

In der Ausgangsmontageposition nach Fig. 1. und 4. ist der mechanischer Riemenspanner 1 in der nicht eingerasteten Stellung, d.h. der Spannhebel 3 bewegt sich entlang der bogenartigen Wand 5 des Grundkörpers 2. Nach Ingangsetzung verschiebt sich der Spanner 1 in die Arbeitsspannposition und zwar so, dass durch die Bewegung des Spannhebels 3 die Arretierungsraste 7 des Spannhebels 3 in die Feststellkante 6 des Grundkörpers 2 nach Fig. 2. und 4. einrastet und gleichzeitig der Drehpunkt 4 des Grundkörpers 2 in der länglichrunden Öffnung des Spannhebels 3 verschoben wird. Dadurch befindet sich der Spannhebel 3 sowie der Spanner 1 selbst in der Feststellposition.

Nicht weniger wichtiger Bestandteil des Mechanismus des Riemenspanners 1 ist die Spannrolle 14, welche den Kontakt des mechanischen Riemenspanners 1 mit dem Riemen ermöglicht. Die Spannrolle umfasst einen Axiallager 10, eine Riemenscheibe 11, eine Unterlegscheibe unter die rechtsdrehende Schraube 12 und die rechtsdrehende Schraube 13, mit der sie zum Spannhebel 3 befestigt ist.

### Gewerbliche Anwendbarkeit

Mechanischer Riemenspanner mit einer Feststellposition gegen den Rücklauf kann überall dort angewendet werden, wo das Spannen eines elastischen Riemens und seiner einfacher Ein- und Ausbau in bestimmter Position gefordert wird.

### Verwendete Bezeichnungen

1. Mechanischer Riemenspanner des Antriebsriemens der Nebenaggregate des Fahrzeuges
2. Grundkörper des Spanners
3. Spannhebel
4. Drehpunkt des Grundkörpers
5. bogenartige Wand des Grundkörpers
6. Feststellkante der bogenartigen Wand des Grundkörpers
7. Arretierungsraste des Spannhebels
8. länglichrunde Öffnung des Spannhebels
9. linksdrehende Schraube
10. Axiallager
11. Riemenscheibe
12. Unterlegscheibe unter die rechtsdrehende Schraube
13. rechtsdrehende Schraube
14. Spannrolle des Spanners

## Patentansprüche

1. Mechanischer Riemenspanner (1) der Nebenaggregate mit einer Feststellposition gegen den Rücklauf des Riemens, der einen Grundkörper (2) des eigentlichen Riemenspanners (1), den Spannhebel (3) und die Spannrolle (14) umfasst, **dadurch gekennzeichnet, dass** der Grundkörper (2) des mechanischen Spanners (1) eine bogenartige Wand (5) aufweist, die eine Feststellkante (6) hat und dass der Spannhebel (3) eine Arretierungsraste (7) und eine länglichrunde Öffnung (8) aufweist, die winkelverschwenkt in der Richtung der Resultante der Kräfte im Riemen ist, wobei die Arretierungsraste (7) des Spannhebels (3) als ein Sperrgegenstück ausgebildet ist, das in die Feststellkante (6) des Grundkörpers (2) des Riemenspanners (1) einrastet.

2. Mechanischer Riemenspanner (1) nach Anspruch 1 **dadurch gekennzeichnet, dass** der Spannhebel (3) zum Grundkörper (2) des Spanners (1) mit einer linksdrehenden Schraube (9) befestigt ist, die vor dem eigentlichen Anziehen eine durch die länglichrunde Öffnung (8) begrenzte Dreh- und Schubbewegung des Spannhebels (3) ermöglicht.

3. Mechanischer Riemenspanner (1) nach vorgenannten Ansprüchen **dadurch gekennzeichnet, dass** in der länglichrunden Öffnung (8) des Spannhebels (3) und zugleich im Drehpunkt (4) des Grundkörpers (2) die linksdrehende Schraube (9) angeordnet ist, womit die Verbindung des Grundkörpers (2) mit dem Spannhebel (3) gebildet wird.

4. Mechanischer Riemenspanner (1) nach vorgenannten Ansprüchen **dadurch gekennzeichnet, dass** die Spannrolle (14) des Riemenspanners (1) einen Axiallager (10), eine Riemenscheibe (11), eine Unterlegscheibe (12) unter die rechtsdrehende Schraube (13) und die rechtsdrehende Schraube (13) umfasst, mit der sie zum Spannhebel (3) befestigt ist.

## Claims

1. Mechanical belt tensioner (1) for the auxiliary units having a fixing position against the return of the belt, which mechanical belt tensioner (1) comprises a main body (2) of the actual belt tensioner (1), the tensioning lever (3) and the tensioning roller (14), **characterized in that** the main body (2) of the mechanical tensioner (1) has an arcuate wall (5) which has a fixing edge (6), and **in that** the tensioning lever (3) has a locking latch (7) and an obround opening (8)which is tilted angularly in the direction of the resultant of the forces in the belt, the locking latch (7) of the tensioning lever (3) being configured as a keeper which latches into the fixing edge (6) of the main body (2) of the belt tensioner (1).

2. Mechanical belt tensioner (1) according to Claim 1, **characterized in that** the tensioning lever (3) is fastened to the main body (2) of the tensioner (1) by way of a left-handed screw (9) which, before actually being tightened, makes a rotational and translator movement of the tensioning lever (3) possible, which rotational and translator movement is limited by the obround opening (8)

3. Mechanical belt tensioner (1) according to the abovementioned claims, **characterized in that** the left-handed screw (9) is arranged in the obround opening (8) of the tensioning lever (3) and at the same time at the pivot point (4) of the main body (2), by way of which the connection of the main body (2) to the tensioning lever (3) is formed.

4. Mechanical belt tensioner (1) according to the abovementioned claims, **characterized in that** the tensioning roller (14) of the belt tensioner (1) comprises an axial bearing (10), a pulley wheel (11), a washer (12) below the right-handed screw (13), and the right-handed screw (13), by way of which the said tensioning roller (14) is fastened to the tensioning lever (3).

## Revendications

1. Tendeur de courroie mécanique (1) de groupes auxiliaires avec une position de fixation contre le retour de la courroie, lequel comprend un corps de base (2) du tendeur de courroie proprement dit (1), le levier de tensionnement (3) et le galet tendeur (14), **caractérisé en ce que** le corps de base (2) du tendeur mécanique (1) présente une paroi de forme courbe (5) qui présente une arête de fixation (6) et **en ce que** le levier de tensionnement (3) présente un cliquet d'arrêt (7) et une ouverture ronde allongée (8) qui est pivotée angulairement dans la direction de la résultante des forces dans la courroie, le cliquet d'arrêt (7) du levier de tensionnement (3) étant réalisé sous forme de pièce de blocage conjuguée qui s'encliquète dans l'arête de fixation (6) du corps de base (2) du tendeur de courroie (1).

2. Tendeur de courroie mécanique (1) selon la revendication 1, **caractérisé en ce que** le levier de tensionnement (3) est fixé par rapport au corps de base (2) du tendeur (1) avec une vis à hélice à gauche (9) qui permet, avant le vissage proprement dit, un mouvement de rotation et de poussée limité du levier de tensionnement (3) à travers l'ouverture ronde allongée (8).

3. Tendeur de courroie mécanique (1) selon les revendications précédentes, **caractérisé en ce que** la vis à hélice à gauche (9) est disposée dans l'ouverture ronde allongée (8) du levier de tensionnement (3) et simultanément au centre de rotation (4) du corps de base (2), ce qui forme ainsi la liaison du corps de base (2) avec le levier de tensionnement (3).

4. Tendeur de courroie mécanique (1) selon les revendications précédentes, **caractérisé en ce que** le galet tendeur (14) du tendeur de courroie (1) comprend un palier axial (10), une poulie (11), une rondelle (12) sous la vis à hélice à droite (13) et la vis à hélice à droite (13), avec laquelle il est fixé au levier de tensionnement (3).
